# FASCICULE DE BREVET EUROPEEN

(11) **EP 2 260 519 B1**
(45) Date de publication et mention de la délivrance du brevet: **31.12.2014**
(21) Numéro de dépôt: 09742251.3
(22) Date de dépôt: 07.04.2009
(51) Int. Cl.: H02N 2/06, F02D 41/20

(54) **DISPOSITIF DE COMMANDE D'UN ACTIONNEUR PIEZO-ELECTRIQUE ULTRASONORE**
VORRICHTUNG ZUR STEUERUNG EINES PIEZOELEKTRISCHEN ULTRASCHALLAKTUATORS
DEVICE FOR CONTROLLING AN ULTRASONIC PIEZOELECTRIC ACTUATOR

(30) Priorité: 08.04.2008 FR 0852326
(43) Date de publication de la demande: 15.12.2010
(73) Titulaire: Renault S.A.S., 92100 Boulogne-Billancourt (FR)
(72) Inventeur: NOUVEL, Clement, F-92140 Clamart (FR); BARROSO, Paulo, F-78130 Les Mureaux (FR)
(86) Numéro de dépôt international: PCT/FR2009/050587
(87) Numéro de publication internationale: WO 2009/136053

(56) Documents cités:
- EP-A- 0 371 469
- DE-A1- 19 632 871
- DE-A1- 19 827 052
- DE-A1- 19 954 023

## Description

L'invention concerne un dispositif de commande, embarqué sur un véhicule automobile, d'au moins un actionneur piézo-électrique ultrasonore piloté électroniquement et lié avec un injecteur de carburant dans un moteur à combustion interne.

Plus précisément, l'invention concerne, selon un premier de ses aspects, un dispositif de commande tel que celui de l'état de l'art partiellement illustré sur les figures 1-2 et décrit, par exemple, dans la demande de brevet français FR 2 847 743. Ce dispositif est conçu pour commander au moins un actionneur piézo-électrique ultrasonore 4, piloté électroniquement à partir d'un calculateur de contrôle 10 et d'une source de tension continue V_{batt} (quelques dizaines de volts, par exemple, 12 V ou 42 V). Le dispositif de commande comporte :
- un premier étage 1 d'élévation de ladite tension continue V_{batt} alimenté par la source de tension continue V_{batt} et conçu pour générer une tension intermédiaire continue Vᵢₙₜₑᵣ (quelques centaines de volts, par exemple, 250 V) dans une ligne d'alimentation 5,
- un deuxième étage 2 de stockage alimenté, via la ligne d'alimentation 5, par la tension intermédiaire continue Vᵢₙₜₑᵣ générée par le premier étage 1, et comportant un premier moyen de stockage 20 connecté, d'une part, à une masse K, et, d'autre part, à la ligne d'alimentation 5, et conçu pour stocker la tension intermédiaire continue Vᵢₙₜₑᵣ,
- un troisième étage 3 de modulation de la tension intermédiaire continue Vᵢₙₜₑᵣ alimenté, via la ligne d'alimentation 5, par la tension intermédiaire continue Vᵢₙₜₑᵣ stockée par le deuxième étage 2, et conçu pour générer une tension d'excitation alternative V_{E} (supérieure à mille volts, par exemple, 1200 V) de l'actionneur piézo-électrique ultrasonore 4.

Ce dispositif de commande connu permet de délivrer une commande en tension intermédiaire continue Vᵢₙₜₑᵣ du type « activation/maintien » qui vise à assurer un fonctionnement attendu de l'injecteur 7, à savoir :
- délivrer, par le premier 1 et le deuxième 2 étages, une forte amplitude de tension intermédiaire continue Vᵢₙₜₑᵣ au troisième étage 3 pendant une courte phase d'activation de l'injection, c'est-à-dire, au cours des premiers instants de l'injection, pour initier une excitation quasi instantanée, par le troisième étage 3, de l'actionneur piézo-électrique ultrasonore 4, de manière à accélérer une ouverture de l'injecteur 7 en assurant ainsi un débit de carburant dans un cylindre du moteur 6,
- délivrer, par le premier 1 et le deuxième 2 étages, une amplitude modérée de tension intermédiaire continue Vᵢₙₜₑᵣ au troisième étage 3 pendant une longue phase de maintien de l'injection, c'est-à-dire, jusqu'à la fin de l'injection, une fois les dits premiers instants écoulés, pour maintenir l'excitation, par le troisième étage 3, de l'actionneur piézo-électrique ultrasonore 4, de manière à conserver l'injecteur 7 en position ouverte pour le reste de l'injection.

Pour réaliser ces variations d'amplitude de tension, le dispositif de commande selon FR 2 847 743 et, en particulier, le premier 1 et le deuxième 2 étages (notamment des moyens commutateurs (transistors) et autres moyens composants passifs), doivent être surdimensionnés car doivent être prévus pour supporter une puissance maximale fournie au troisième étage 3 pendant la phase d'activation. Bien que délivrée à des temps courts, cette puissance maximale s'avère supérieure par rapport à une puissance modérée délivrée à des temps longs de la phase de maintien. De ce fait, un compromis délicat doit être réalisé entre la compacité du dispositif de commande et des moyens volumineux car surdimensionnés du premier 1 et du deuxième
2 étages pour délivrer au troisième étage 3 ladite commande « activation/maintien ».

DE 199 54 023 A1 divulgue un dispositif de commande d'un actionneur piézo-électrique semblable, comportant un étage de convertisseur DC-DC et un étage de stockage de la tension intermédiaire utilisant deux condensateurs en parallèle, l'une des branches ayant une diode en série.

La présente invention, qui s'appuie sur cette observation originale, a principalement pour but de proposer un dispositif de commande visant au moins à réduire l'une au moins des limitations précédemment évoquées.

A cette fin, le dispositif de commande, par ailleurs conforme à la définition générique qu'en donne le préambule ci-dessus, est essentiellement caractérisé en ce que le deuxième étage comprend au moins :
- un deuxième moyen de stockage monté entre la ligne d'alimentation et la masse en parallèle avec le premier moyen de stockage et conçu pour stocker la tension intermédiaire continue Vᵢₙₜₑᵣ,
- un premier moyen commutateur monté en série entre le deuxième moyen de stockage et la masse et conçu pour commander sélectivement un stockage de la tension intermédiaire continue Vᵢₙₜₑᵣ par le deuxième moyen de stockage jusqu'à une consigne de basse tension continue V_{BT} telle que V_{BT} < Vᵢₙₜₑᵣ.

Grâce à cet agencement, il est possible :
- d'alimenter, à partir du même premier étage dimensionné pour ladite puissance modérée, deux moyens de stockage distincts du deuxième étage, de manière à y stocker deux tensions différentes,
- puis de délivrer au troisième étage 3 ladite commande « activation/maintien » en tension successivement à partir du premier ou du deuxième moyens de stockage, de façon à obtenir deux amplitudes de tension distinctes : respectivement Vᵢₙₜₑᵣ lors de la phase d'activation à partir du premier moyen de stockage et V_{BT} lors de la phase de maintien à partir du deuxième moyen de stockage.

Le fait qu'au moins le premier étage n'est plus dimensionné à la puissance (maximale) d'activation mais seulement à celle (modérée) de maintien le rend moins volumineux (et moins onéreux) et, donc, contribue in fine à une meilleure compacité du dispositif de commande selon l'invention.

Selon un deuxième de ses aspects, l'invention concerne un moteur à combustion interne utilisant le dispositif de commande selon l'invention, c'est-à-dire un tel moteur où est disposé ce dispositif de commande.

D'autres caractéristiques et avantages de l'invention ressortiront clairement de la description qui en est faite ci-après, à titre indicatif et nullement limitatif, en référence aux dessins annexés, dans lesquels :
la figure 1 représente un schéma électronique simplifié partiel d'un dispositif de commande connu à trois étages permettant de piloter un actionneur piézo-électrique ultrasonore pour injecter un carburant dans un moteur à combustion interne,
la figure 2 représente un schéma électronique simplifié partiel d'un troisième étage du dispositif de commande connu à trois étages formé par un modulateur de tension et connecté à l'actionneur piézo-électrique ultrasonore,
les figures 3 à 5 représentent trois schémas électroniques simplifiés partiels respectivement de première, deuxième et troisième variantes d'un deuxième étage du dispositif de commande à trois étages selon l'invention,
la figure 6 illustre schématiquement un algorithme de commande, lors de stockage de tension intermédiaire (charge), d'un premier et d'un deuxième moyens commutateur de la troisième variante du deuxième étage du dispositif de commande à trois étages selon l'invention représentée sur la figure 5,
la figure 7 représente un schéma électronique simplifié partiel d'une première variante d'un premier étage du dispositif de commande à trois étages selon l'invention formé par un convertisseur de tension du type FLYBACK isolé de manière galvanique,
la figure 8 représente un schéma électronique simplifié partiel d'une deuxième variante d'un premier étage du dispositif de commande à trois étages selon l'invention formé par un convertisseur de tension du type BOOST.

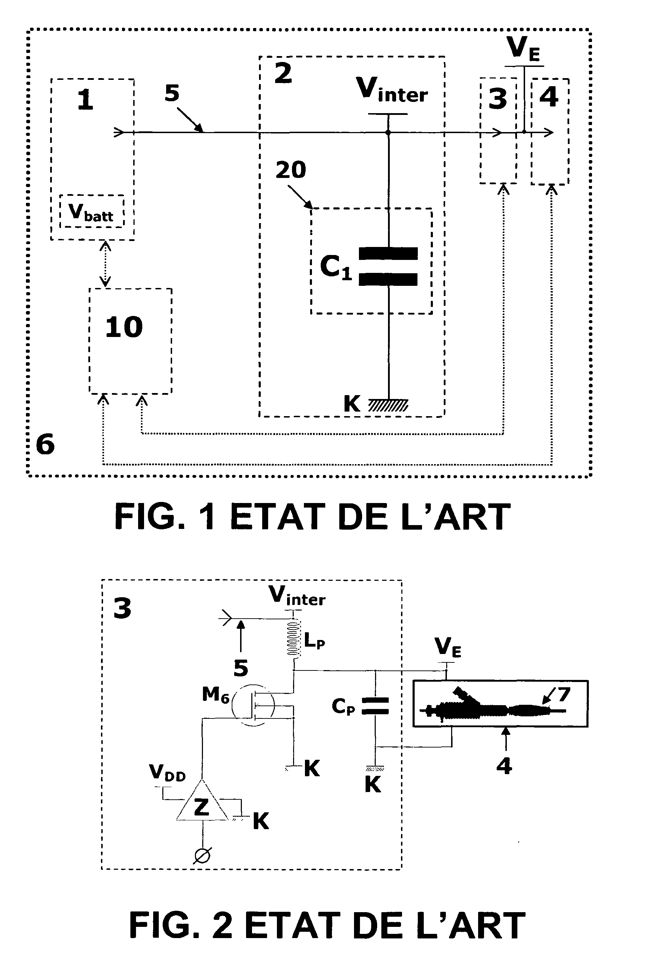

Les figures 1 et 2, présentant l'état de l'art, ont déjà été discutées ci-dessus.

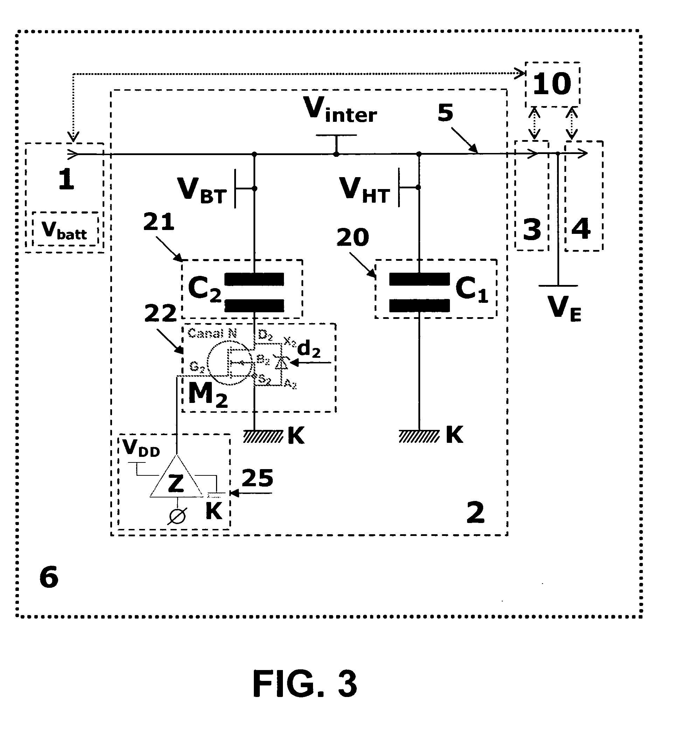

Comme annoncé précédemment et illustré sur les figures 3-8, l'invention concerne un dispositif de commande embarqué sur un véhicule automobile et conçu pour commander au moins un actionneur piézo-électrique ultrasonore 4 piloté électroniquement à partir d'un calculateur de contrôle 10 et d'une source de tension continue V_{batt}. L'actionneur 4 est lié avec un injecteur 7 de carburant, par exemple, dans un cylindre d'un moteur à combustion interne 6. Dans un autre exemple (non représenté sur les figures), l'injecteur 7 peut aussi être installé dans un conduit d'échappement pour injecter du carburant, par exemple, dans un moyen de dépollution logé dans ledit conduit pour y faciliter une réaction d'oxydation des suies.

Le dispositif de commande comporte (figures 3-5, 7-8) :
- un premier étage 1 d'élévation de ladite tension continue V_{batt} alimenté par la source de tension continue V_{batt} et conçu pour générer une tension intermédiaire continue Vᵢₙₜₑᵣ dans une ligne d'alimentation 5,
- un deuxième étage 2 de stockage alimenté, via la ligne d'alimentation 5, par la tension intermédiaire continue Vᵢₙₜₑᵣ générée par le premier étage 1, et comportant un premier moyen de stockage 20 connecté, d'une part, à une masse K, et, d'autre part, à la ligne d'alimentation 5, et conçu pour stocker la tension intermédiaire continue Vᵢₙₜₑᵣ,
- un troisième étage 3 de modulation de la tension intermédiaire continue Vᵢₙₜₑᵣ alimenté, via la ligne d'alimentation 5, par la tension intermédiaire continue Vᵢₙₜₑᵣ stockée par le deuxième étage 2, et conçu pour générer une tension d'excitation alternative V_{E} de l'actionneur piézo-électrique ultrasonore 4.

Selon l'invention, le deuxième étage 2 comprend au moins (figures 3-5) :
- un deuxième moyen de stockage 21 monté entre la ligne d'alimentation 5 et la masse K en parallèle avec le premier moyen de stockage 20 et conçu pour stocker la tension intermédiaire continue Vᵢₙₜₑᵣ,
- un premier moyen commutateur 22 monté en série entre le deuxième moyen de stockage 21 et la masse K et conçu pour commander sélectivement un stockage de la tension intermédiaire continue Vᵢₙₜₑᵣ par le deuxième moyen de stockage 21 jusqu'à une consigne de basse tension continue V_{BT} telle que V_{BT} < Vᵢₙₜₑᵣ.

Cet emplacement privilégié du premier moyen commutateur 22 « référencé à la masse K », c'est-à-dire, disposé entre le deuxième moyen de stockage 21 et la masse K, permet de laisser la ligne d'alimentation 5 en tension libre du premier moyen commutateur 22. Cela permet de piloter plus facilement un circuit électronique du dispositif selon invention.

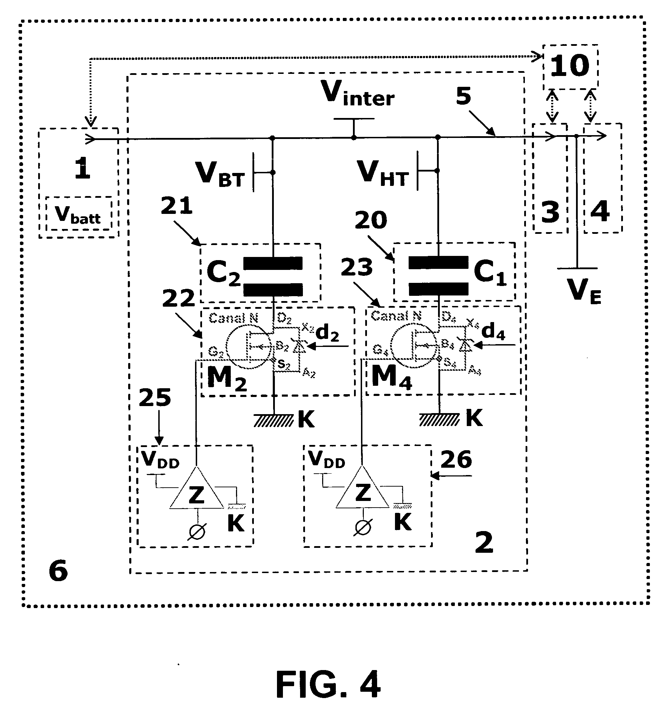

Comme le montre la figure 4, le deuxième étage 2 peut comprendre au moins un deuxième moyen commutateur 23 monté en série entre le premier moyen de stockage 20 et la masse K et conçu pour commander sélectivement un stockage de la tension intermédiaire continue Vᵢₙₜₑᵣ par le premier moyen de stockage 20 jusqu'à une consigne haute tension continue V_{HT} telle que V_{HT} ≤ Vᵢₙₜₑᵣ.

Grâce à cet agencement, il est possible de rendre le premier 20 et le deuxième 21 moyens de stockage interchangeables. En outre, cette topologie permet de moduler la haute tension V_{HT} pour produire des injections multiples de carburant pendant le même cycle de compression dans le cylindre.

De préférence, le deuxième étage 2 comprend au moins un troisième moyen commutateur 24 monté en série entre le premier moyen de stockage 20 et la ligne d'alimentation 5 et conçu pour commander sélectivement un stockage de la tension intermédiaire continue Vᵢₙₜₑᵣ par le premier moyen de stockage 20 jusqu'à une consigne de haute tension continue V_{HT} telle que V_{BT} < V_{HT} ≤ Vᵢₙₜₑᵣ.

Grâce à cette topologie, il est possible de connecter le premier 20 ou le deuxième 21 moyen de stockage au troisième étage 3 de modulation via la ligne d'alimentation 5 de manière isolée, c'est-à-dire, sans un rééquilibrage de tension (et, donc, sans dégagement excessif de chaleur (pertes thermiques) pouvant conduire à un endommagement, voire, à une destruction, du circuit du dispositif de commande) entre ces deux moyens de stockage 20, 21 (si les commandes correspondantes du premier 22 et du troisième 23 moyen commutateur ne se chevauche pas).

Le premier moyen de stockage 20 peut comprendre au moins un premier condensateur présentant une première capacité électrique C₁ et le deuxième moyen de stockage 21 peut comprendre au moins un deuxième condensateur présentant une deuxième capacité électrique C₂ telle que C₂ > C₁. De préférence, C₂ > 3*C₁ lorsque :
- le premier condensateur est utilisée pour délivrer, via la ligne d'alimentation 5, la haute tension V_{HT} au troisième étage 3 pendant une courte phase d'activation de l'injection, c'est-à-dire, au cours des premiers instants (entre environ 20µs et environ 200µs) de l'injection, pour initier une excitation quasi instantanée, par le troisième étage 3, de l'actionneur piézo-électrique ultrasonore 4, de manière à accélérer une ouverture de l'injecteur 7 en assurant ainsi un débit de carburant dans le cylindre du moteur 6, et
- le deuxième condensateur est utilisée pour délivrer, via la ligne d'alimentation 5, la basse tension V_{BT} au troisième étage 3 pendant une longue (» 200 µs) phase de maintien de l'injection, c'est-à-dire, jusqu'à la fin de l'injection, une fois les dits premiers instants écoulés, pour maintenir l'excitation, par le troisième étage 3, de l'actionneur piézo-électrique ultrasonore 4, de manière à conserver l'injecteur 7 en position ouverte pour le reste de l'injection.

Grâce à ces agencements, un dimensionnement du dispositif de commande et, en particulier, un dimensionnement du deuxième étage 2 (et, surtout, celui des dits condensateurs représentant des sources d'énergie électrique lors des phases d'activation et de maintien), peut être optimisé en tenant compte du fait que les besoins en énergie électrique du troisième étage 3 sont plus faibles pour la phase d'activation (qui, dans l'exemple ci-dessus, est puisée à partir de la première capacité C₁) par rapport aux besoins en énergie électrique pour la phase de maintien (qui, dans l'exemple ci-dessus, est puisée à partir de la deuxième capacité C₂).

En outre, en absence du troisième moyen commutateur 24 (par exemple, pour la topologie illustrée sur la figure 3), un phénomène de rééquilibrage de tension se produit entre le premier et le deuxième condensateurs (lors de leur commutation pour délivrer la tension dans la ligne d'alimentation 5) entre la fin de la phase d'activation et la début de la phase de maintien. Dans ce cas, le rapport C₂ > C₁ entre les capacités (et, plus encore, le rapport C₂ > 3*C₁) contribue à rendre ce rééquilibrage plus rapide et, de ce fait, à minimiser un dégagement de chaleur qui l'accompagne, de manière à protéger une intégrité du circuit électronique du dispositif de commande.

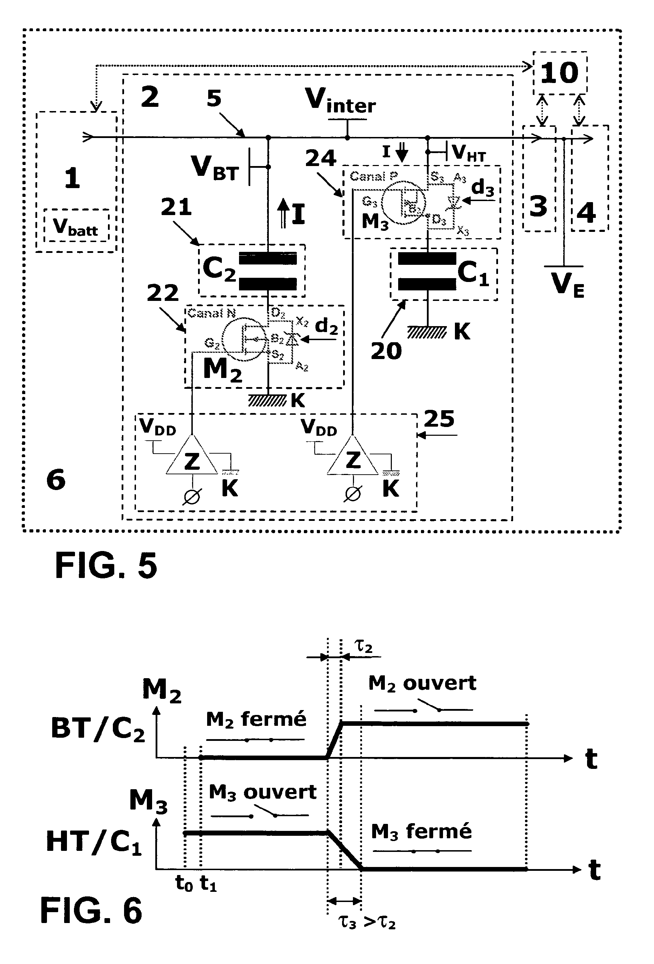

Comme illustré sur la figure 5, le premier moyen commutateur 22 monté en série entre le deuxième moyen de stockage 21 et la masse K peut comprendre au moins un premier transistor M₂ présentant :
- une première source S₂ connectée à la masse K,
- un premier drain D₂ connecté au deuxième moyen de stockage 21,
- une première grille G₂ connectée à un premier bloc de commande 25,
- un premier substrat B₂ connecté à la masse K, et
le troisième moyen commutateur 24 monté en série entre le premier moyen de stockage 20 et la ligne d'alimentation 5 peut comprendre au moins un deuxième transistor M₃ présentant :
- une deuxième source S₃ connectée à la ligne d'alimentation 5,
- un deuxième drain D₃ connecté au premier moyen de stockage 20,
- une deuxième grille G₃ connectée au premier bloc de commande 25,
- un deuxième substrat B₃ connecté à la ligne d'alimentation 5.

L'utilisation du premier M₂ et du deuxième M₃ transistors permet de commander aisément le deuxième 21 et le premier 20 moyens de stockage à l'aide du premier bloc de commande 25, en particulier, en minimisant les pertes énergétiques au moment des commutations entre la première capacité C₁ et la deuxième capacité C₂ et en offrant une plus grande facilité de fonctionnement et une plus grande dynamique dans les valeurs de tensions disponibles en phase de maintien.

Comme illustré sur la figure 5, le premier transistor M₂ comprend au moins une première diode d₂ présentant une première anode A₂ connectée à la première source S₂ et une première cathode X₂ connectée au premier drain D₂ et le deuxième transistor M₃ comprend au moins une deuxième diode d₃ présentant une deuxième anode A₃ connectée à la deuxième source S₃ et une deuxième cathode X₃ connectée au deuxième drain D₃.

Grâce à cette topologie, il est possible de maintenir la haute tension V_{HT} toujours supérieure à la basse tension V_{BT} (V_{HT} > V_{BT}), en particulier lors de la décharge (lorsque le deuxième étage 2 alimente en tension le troisième étage 3). En effet, dès que le premier condensateur en décharge (partant de la haute tension V_{HT}) approche la basse tension V_{BT} du deuxième condensateur, il se produit une connexion entre ces deux condensateurs par le biais de la première d₂ et de la deuxième d₃ diodes, de manière à maintenir l'inéquation : V_{HT} > V_{BT}. Cette propriété présente des intérêts de fiabilité et de coût dans la mesure où aucun système additionnel n'est nécessaire pour assurer l'inéquation V_{HT} > V_{BT} lors d'un fonctionnement du dispositif de commande en décharge ou en charge (lorsque le premier étage 1 alimente en tension le deuxième étage 2).

De préférence, le premier transistor M₂ est du type à effet de champ à métal oxyde semi-conducteur (en anglais MOSFET), à canal N (avec un courant assuré par un déplacement d'électrons), et le deuxième transistor M₃ est du type à effet de champ à métal oxyde semi-conducteur (en anglais MOSFET) à canal P (avec un courant assuré par un déplacement de trous).

La première d₂ et la deuxième d₃ diodes existent respectivement de façon structurelle sur le premier M₂ et le deuxième M₂ transistors du type MOSFET. Grâce à cette topologie, il est donc possible de faire une économie des pièces distinctes (du type première d₂ et deuxième d₃ diodes décrites ci-dessus encombrant le circuit électronique du dispositif de commande), ladite première d₂ et ladite deuxième d₃ diodes étant implantées dans les transistors MOSFET en rendant ainsi le circuit électronique du dispositif de commande encore plus miniature.

Comme illustré sur la figure 4, le deuxième moyen commutateur 23 monté en série entre le premier moyen de stockage 20 et la masse K peut comprendre au moins un troisième transistor M₄ présentant :
- une troisième source S₄ connectée à la masse K,
- un troisième drain D₄ connecté au premier moyen de stockage 20,
- une troisième grille G₄ connectée à un second bloc de commande 26,
- un troisième substrat B₄ connecté à la masse K,
le troisième transistor M₄ peut comprendre au moins une troisième diode d₄ présentant une troisième anode A₄ connectée à la troisième source S₄ et une troisième cathode à connectée au troisième drain D₄, le troisième transistor M₄ étant, de préférence, du type à effet de champ à métal oxyde semi-conducteur (en anglais MOSFET) à canal N.

Les avantages procurés par le deuxième moyen commutateur 23 ainsi formé sont sensiblement similaires que ceux déjà discutés ci-dessus en rapport avec le premier moyen commutateur 22 comprenant le premier transistor M₂ et ne seront détaillés ici.

Subsidiairement, notons que chacun des deux blocs de commande 25, 26 peut comprendre au moins un module du type appelé en anglais « driver » et référencé « Z » sur les figures 3 à 5. Chaque driver Z est disposé entre la grille du transistor correspondant et la masse K et délivre, au niveau de ladite grille, une tension de commande V_{DD} qui permet de rendre le transistor correspondant fermé, c'est-à-dire, permettant au un courant électrique de passer (en absence de tension V_{DD} ou lorsque la tension V_{DD} reste inférieure à un certain seuil propre au transistor, ce dernier reste bloqué, c'est-à-dire, ouvert, en interdisant toute circulation du courant électrique). Pour minimiser davantage le circuit électronique du dispositif de commande, les deux blocs de commande 25, 26 peuvent être confondus (figure 5) de manière à comprendre, par exemple, autant des drivers Z que des transistors M₂, M₃ à commander.

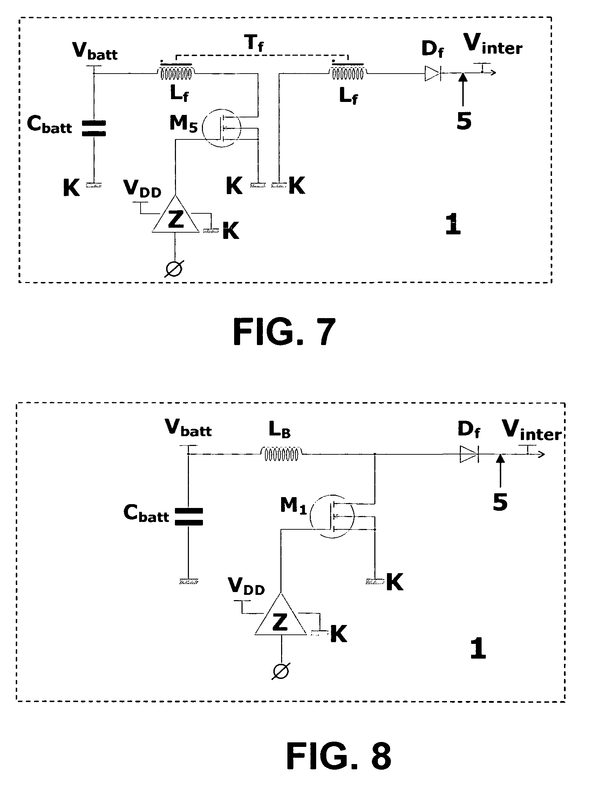

De préférence, le premier étage 1 comprend au moins un convertisseur de tension du type FLYBACK isolé de manière galvanique (grâce à un transformateur T_{f}), comme celui illustré, par exemple, sur la figure 7, et comprenant la source de tension continue V_{batt}, par exemple, une batterie 12 V ou 42 V d'une capacité C_{batt}, le transformateur T_{f} comprenant deux inductances L_{f} couplées magnétiquement, une diode D_{f}, un moyen commutateur (par exemple, un quatrième transistor M₅ du type MOSFET commandé à son tour par le driver Z) pilotant l'une des deux inductances L_{f}.

De part le rapport de transformation de tension du transformateur T_{f}, il est possible de réaliser des gains en tension à la sortie du premier étage 1 tout en préservant une dynamique imposée par le cycle de compression dans le cylindre (et, donc, de l'injection). De plus, un effet d'inductance de fuite des moyens magnétiques du transformateur T_{f} permet d'assurer une commutation douce du quatrième transistor M₅, (une commutation douce signifie une fermeture du quatrième transistor M₅ à un instant où la tension à ses bornes est faible. La tension faible est une tension qui occasionne, à chaque commutation, une dissipation énergétique dans le quatrième transistor M₅ inférieure ou égale à une dissipation résistive ou magnétique dans le transformateur T_{f}) ce qui améliore davantage un rendement de puissance du premier étage 1 comprenant le convertisseur de tension du type FLYBACK. L'isolement galvanique permet aussi d'améliorer les performances du premier étage 1 en compatibilité électromagnétique, dite CEM, c'est-à-dire, en une capacité du premier étage 1 à fonctionner sans introduire de perturbations électromagnétiques dans le circuit électronique du dispositif de commande, en particulier pour un gain en tension Vᵢₙₜₑᵣ/ V_{batt} > 10.

De manière alternative, le premier étage 1 peut comprendre au moins un convertisseur de tension du type BOOST, comme celui illustré, par exemple, sur la figure 8, et comprenant la source de tension continue V_{batt}, par exemple, une batterie 12 V ou 42 V d'une capacité C_{batt}, une inductance L_{B}, une diode D_{f}, un moyen commutateur (par exemple, un cinquième transistor M₁ du type MOSFET) commandé par le driver Z.

L'avantage de cet agencement réside dans une robustesse du convertisseur de tension du type BOOST.

Le troisième étage 3 de modulation peut présenter une topologie connue, par exemple, celle illustrée sur la figure 2, décrite dans la demande de brevet français FR 2 847 743 et comprenant une inductance L_{P} pilotée par un moyen commutateur (par exemple, un sixième transistor M₆ du type MOSFET commandé à son tour par le driver Z), un moyen de stockage (par exemple, un condensateur d'une capacité électrique C_{P}).

Quant au fonctionnement du dispositif de commande selon l'invention, il est à noter que la charge et la décharge du deuxième étage 2 (plus particulièrement, du premier 20 et du deuxième 21 moyens de stockage) ne sont jamais simultanées :
- soit une première partie du circuit électronique du dispositif de commande incluant le premier 1 et le deuxième 2 étages, est active (la charge),
- soit une deuxième partie du circuit électronique incluant le deuxième 2 et le troisième 3 étages de commande est active.

De ce fait, la ligne d'alimentation 5 fonctionne également de manière cyclique :
- soit en charge (entre deux cycles de compression dans le cylindre, c'est-à-dire, entre deux injections), par le premier étage 1, du deuxième étage 2. Le troisième étage 3 est alors inactif, son moyen commutateur étant ouvert (le sixième transistor M₆ sur la figure 2 déconnectant dans son état « ouvert » l'inductance L_{P} du troisième étage 3 de la masse K),
- soit en décharge (au cours de chaque injection), en alimentant en tension le troisième étage 3, d'abord (lors de la phase d'activation), à partir du premier moyen de stockage 20, ensuite (lors de la phase de maintien), à partir du deuxième moyen de stockage 21. Le premier étage 1 est alors inactif, son moyen commutateur étant ouvert (pour le convertisseur de tension du type BOOST (figure 8) c'est le cinquième transistor M₁ en état « ouvert » déconnecte l'inductance L_{B} du premier étage 1 de la masse K ; pour le convertisseur de tension du type FLYBACK (figure 7), c'est le quatrième transistor M₅ en état « ouvert » déconnecte l'une des inductances L_{f} du transformateur T_{f} du premier étage 1 de la masse K).

Un premier exemple de fonctionnement est décrit en rapport avec le dispositif de commande muni du premier transistor M₂, comme illustré sur la figure 3.

Dans ce cas, au début de la charge, le premier transistor M₂ reste fermé (en connectant la deuxième capacité C₂ à la masse K). Par conséquent, les deux capacités C₁ et C₂ sont chargées jusqu'à la consigne de basse tension continue V_{BT} (tension adaptée pour la phase de maintien) telle que V_{BT} < Vᵢₙₜₑᵣ. Ensuite, le premier transistor M₂ s'ouvre (en déconnectant la deuxième capacité C₂ à la masse K). De ce fait, la tension de la deuxième capacité C₂ reste inchangée (égale à la consigne de basse tension continue V_{BT}) lorsque la charge de la première capacité C₁ se poursuit (à partir du premier étage 1 via la ligne d'alimentation 5) jusqu'à la consigne de haute tension continue V_{HT} telle que V_{BT} < V_{HT} ≤ Vinter (de préférence, V_{HT} = Vᵢₙₜₑᵣ).

Au début de la décharge (au cours de l'injection), le premier transistor M₂ reste ouvert (la deuxième capacité C₂ étant donc déconnectée de la masse K) lors de la phase d'activation. Le troisième étage 3 est alors alimenté en haute tension V_{HT} à partir de la première capacité C₁. Pendant un passage de la phase d'activation vers la phase de maintien, le premier transistor M₂ se ferme (en connectant la deuxième capacité C₂ à la masse K). Le rééquilibrage de tension s'opère entre la première C₁ et la deuxième C₂ capacités, de manière à ce qu'un différentiel de tension à leurs bornes respectives s'annule. L'injection en phase de maintien se poursuit avec une nouvelle tension qui reste, à la fois, supérieure (bien que sa valeur exacte demeure inconnue après le rééquilibrage) à la consigne de basse tension continue V_{BT} (du fait justement dudit rééquilibrage) et inférieure à la consigne de haute tension continue V_{HT} de la phase d'activation.

Un deuxième exemple de fonctionnement est décrit en rapport avec le dispositif de commande muni du premier transistor M₂ et du deuxième transistor M₃, comme illustré sur la figure 5, à l'aide d'un algorithme de commande des dits transistors M₂, M₃ lors de la charge (stockage de tension par le deuxième étage 2) représenté sur la figure 6.

Dans ce cas, au début de la charge le premier transistor M₂ reste fermé (en connectant la deuxième capacité C₂ à la masse K) et le deuxième transistor M₃ reste ouvert (la première capacité C₁ étant donc déconnectée de la ligne d'alimentation 5). De préférence, pour éviter un rééquilibrage transitoire entre la première capacité C₁ et la deuxième capacité C₂, ledit rééquilibrage transitoire étant générateur de perte thermique, on procède d'abord à l'ouverture du deuxième transistor M₃ (moment t₀ sur la figure 6), puis à la fermeture du premier transistor M₂ (moment t₁ sur la figure 6 tel que t₁ > t₀). Du fait que les deux capacités C₁ et C₂ se retrouvent connectées par l'intermédiaire de la diode d₃, ces capacités C₁ et C₂ sont chargées jusqu'à la consigne de basse tension continue V_{BT} (tension adaptée pour la phase de maintien). Ensuite, le premier transistor M₂ s'ouvre (en déconnectant la deuxième capacité C₂ de la masse K). En prenant en considération qu'un premier laps τ₂ > 0 de temps nécessaire pour ouvrir le premier transistor M₂ à canal N est inférieur à un deuxième laps τ₃ > τ₂ > 0 de temps nécessaire pour fermer le deuxième transistor M₃ à canal P (figure 6), le deuxième transistor M₃ se ferme, passé ledit deuxième laps τ₃, en connectant la première capacité C₁ à la ligne d'alimentation 5. De ce fait, la tension de la deuxième capacité C₂ reste inchangée (égale à la consigne de basse tension continue V_{BT}) lorsque la charge de la première capacité C₁ se poursuit (à partir du premier étage 1 via la ligne d'alimentation 5) jusqu'à la consigne de haute tension continue V_{HT} telle que V_{BT} < V_{HT} ≤ Vᵢₙₜₑᵣ (de préférence, V_{HT} = Vᵢₙₜₑᵣ).

Au début de la décharge (au cours de l'injection), lors de la phase d'activation, le premier transistor M₂ reste ouvert (en déconnectant la deuxième capacité C₂ de la masse K) tandis que le deuxième transistor M₃ reste fermé (en connectant la première capacité C₁ à la ligne d'alimentation 5). Pendant le passage en phase de maintien (après ledit deuxième laps de temps τ₃), le deuxième transistor M₃ s'ouvre (en déconnectant la première capacité C₁ de la ligne d'alimentation 5) et le premier transistor M₂ se ferme (en connectant la deuxième capacité C₂ à la masse K).

Contrairement au premier exemple ci-dessus, aucun rééquilibrage de charge ne s'opère pas dans ce deuxième cas entre la première C₁ et la deuxième C₂ capacités. En effet, tant que la tension aux bornes de la première capacité C₁ est supérieure à celle aux bornes de la deuxième capacité C₂ (V_{HT} > V_{BT}) les deux respectives diodes d₂, d₃ « voient » une tension à leurs respectives anodes A₂, A₃ et cathodes X₂, X₃ strictement positive (V_{D2} = V_{X2} > V_{S2} = V_{A2} et V_{D3} = V_{X3} > V_{S3} = V_{A2}, figure 5). La première diode d₂ et la deuxième diode d₃ sont donc bloquées (sauf si l'on excède une tension d'isolation du MOFSET ce qui n'arrive pas dans des conditions prévues d'utilisation). Le circuit électronique du dispositif de commande se comporte donc comme si les dites diodes d₂, d₃ n'existaient pas. Si la tension aux bornes de la première capacité C₁ baisse suffisamment pour égaler celle aux bornes de la deuxième capacité C₂, la tension aux bornes des diodes respectives d₂, d₃ s'annule, puis tend à descendre en dessous de 0 (V_{D2} = V_{X2} < V_{S2} = V_{A2} et V_{D3} = V_{X3} < V_{S3} = V_{A2}, figure 5), phénomène qui s'arrête immédiatement car les dites diodes d₂, d₃ deviennent passantes et se comporte comme deux interrupteurs fermés (en connectant respectivement la deuxième capacité C₂ à la masse K et la première capacité C₁ à la ligné d'alimentation 5. Le courant peut alors passer, de la deuxième capacité C₂ vers la première capacité C₁ (dans le sens des flèches référencées « I » sur la figure 5), de façon à maintenir l'égalité des tensions aux bornes de la première C₁ et de la deuxième C₂ capacités. En conclusion, l'injection en phase de maintien se poursuit avec la tension égale précisément à la consigne de basse tension continue V_{BT}. Par conséquent, la topologie du dispositif de commande illustrée sur la figure 5 permet une meilleure maîtrise de tension à l'entrée du troisième étage 3 lors de la phase de maintien, comparée à celle illustrée sur la figure 3 qui, du fait de rééquilibrage lors du passage de la phase d'activation vers la phase de maintien, ne permet pas de délivrer la tension précise (égale à la consigne de basse tension V_{BT}) à l'entrée du troisième étage 3 lors de la phase de maintien.

## Revendications

1. Dispositif de commande d'au moins un actionneur piézo-électrique ultrasonore (4), piloté électroniquement à partir d'un calculateur de contrôle (10) et d'une source de tension continue (V_{ba}tt), comportant :
- un premier étage (1) d'élévation de ladite tension continue (V_{batt}) alimenté par la source de tension continue (V_{batt}) et conçu pour générer une tension intermédiaire continue (Vᵢₙₜₑᵣ) dans une ligne d'alimentation (5),
- un deuxième étage (2) de stockage alimenté, via la ligne d'alimentation (5), par la tension intermédiaire continue (Vᵢₙₜₑᵣ) générée par le premier étage (1), et comportant un premier moyen de stockage (20) connecté, d'une part, à une masse (K), et, d'autre part, à la ligne d'alimentation (5), et conçu pour stocker la tension intermédiaire continue (Vᵢₙₜₑᵣ) et un deuxième moyen de stockage (21) monté entre la ligne d'alimentation (5) et la masse (K) en parallèle avec le premier moyen de stockage (20) et conçu pour stocker la tension intermédiaire continue (Vᵢₙₜₑᵣ),
- un troisième étage (3) de modulation de la tension intermédiaire continue (Vᵢₙₜₑᵣ) alimenté, via la ligne d'alimentation (5), par la tension intermédiaire continue (Vᵢₙₜₑᵣ) stockée par le deuxième étage (2), et conçu pour générer une tension d'excitation alternative (V_{E}) de l'actionneur piézo-électrique ultrasonore (4),
**caractérisé en ce que** le deuxième étage (2) comprend au moins :
- un premier moyen commutateur (22) monté en série entre le deuxième moyen de stockage (21) et la masse (K) et conçu pour commander sélectivement un stockage de la tension intermédiaire continue (Vᵢₙₜₑᵣ) par le deuxième moyen de stockage (21) jusqu'à une consigne de basse tension continue (V_{BT}) telle que V_{BT} < Vᵢₙₜₑᵣ.

2. Dispositif de commande selon la revendication 1, **caractérisé en ce que** le deuxième étage (2) comprend au moins un deuxième moyen commutateur (23) monté en série entre le premier moyen de stockage (20) et la masse (K) et conçu pour commander sélectivement un stockage de la tension intermédiaire continue (Vᵢₙₜₑᵣ) par le premier moyen de stockage (20) jusqu'à une consigne haute tension continue (V_{HT}) telle que V_{HT} ≤ Vᵢₙₜₑᵣ.

3. Dispositif de commande selon la revendication 1 ou 2, **caractérisé en ce que** le deuxième étage (2) comprend au moins un troisième moyen commutateur (24) monté en série entre le premier moyen de stockage (20) et la ligne d'alimentation (5) et conçu pour commander sélectivement un stockage de la tension intermédiaire continue (Vᵢₙₜₑᵣ) par le premier moyen de stockage (20) jusqu'à une consigne de haute tension continue (V_{HT}) telle que V_{BT} < V_{HT} ≤ Vᵢₙₜₑᵣ.

4. Dispositif de commande selon l'une quelconque des revendications 1 à 3, **caractérisé en ce que** le premier moyen de stockage (20) comprend au moins un premier condensateur présentant une première capacité électrique (C₁), et **en ce que** le deuxième moyen de stockage (21) comprend au moins un deuxième condensateur présentant une deuxième capacité électrique (C₂) telle que C₂ > C₁.

5. Dispositif de commande selon la revendication 3 ou 4, **caractérisé en ce que** le premier moyen commutateur (22) monté en série entre le deuxième moyen de stockage (21) et la masse (K) comprend au moins un premier transistor (M₂) présentant :
- une première source (S₂) connectée à la masse (K),
- un premier drain (D₂) connecté au deuxième moyen de stockage (21),
- une première grille (G₂) connectée à un premier bloc de commande (25),
- un premier substrat (B₂) connecté à la masse (K), et
**en ce que** le troisième moyen commutateur (24) monté en série entre le premier moyen de stockage (20) et la ligne d'alimentation (5) comprend au moins un deuxième transistor (M₃) présentant :
- une deuxième source (S₃) connectée à la ligne d'alimentation (5),
- un deuxième drain (D₃) connecté au premier moyen de stockage (20),
- une deuxième grille (G₃) connectée au premier bloc de commande (25),
- un deuxième substrat (B₃) connecté à la ligne d'alimentation (5).

6. Dispositif de commande selon la revendication 5, **caractérisé en ce que** le premier transistor (M₂) comprend au moins une première diode (d₂) présentant une première anode (A₂) connectée à la première source (S₂) et une première cathode (X₂) connectée au premier drain (D₂) et **en ce que** le deuxième transistor (M₃) comprend au moins une deuxième diode (d₃) présentant une deuxième anode (A₃) connectée à la deuxième source (S₃) et une deuxième cathode (X₃) connectée au deuxième drain (D₃).

7. Dispositif de commande selon la revendication 5 ou 6, **caractérisé en ce que** le premier transistor (M₂) est du type à effet de champ à métal oxyde semi-conducteur à canal N, et **en ce que** le deuxième transistor (M₃) est du type à effet de champ à métal oxyde semi-conducteur à canal P.

8. Dispositif de commande selon l'une quelconques des revendications 2 à 7, **caractérisé en ce que** le deuxième moyen commutateur (23) monté en série entre le premier moyen de stockage (20) et la masse (K) comprend au moins un troisième transistor (M₄) présentant :
- une troisième source (S₄) connectée à la masse (K),
- un troisième drain (D₄) connecté au premier moyen de stockage (20),
- une troisième grille (G₄) connectée à un second bloc de commande (26),
- un troisième substrat (B₄) connecté à la masse (K),
**en ce que** le troisième transistor (M₄) comprend au moins une troisième diode (d₄) présentant une troisième anode (A₄) connectée à la troisième source (S₄) et une troisième cathode (X₄) connectée au troisième drain (D₄), et
**en ce que** le troisième transistor (M₄) est du type à effet de champ à métal oxyde semi-conducteur à canal N.

9. Dispositif de commande selon l'une des revendications 1 à 8, **caractérisé en ce que** le premier étage (1) comprend au moins un convertisseur de tension du type FLYBACK isolé de manière galvanique.

10. Dispositif de commande selon l'une des revendications 1 à 8, **caractérisé en ce que** le premier étage (1) comprend au moins un convertisseur de tension du type BOOST.

## Patentansprüche

1. Vorrichtung zum Steuern mindestens eines piezoelektrischen Ultraschallaktuators (4), der elektronisch von einem Steuerungsrechner (10) und einer Gleichspannungsquelle (V_{batt}) gesteuert wird, umfassend:
- einen ersten Schritt (1) zur Erhöhung der Gleichspannung (V_{batt}), die von der Gleichspannungsquelle (V_{batt}) eingespeist wird und die angepasst ist, um eine mittlere Gleichspannung (Vᵢₙₜₑᵣ) in einer Speiseleitung (5) zu erzeugen,
- einen zweiten Schritt (2) zum Speichern, der über die Speiseleitung (5) mit der mittleren Gleichspannung (Vᵢₙₜₑᵣ) gespeist wird, die durch den ersten Schritt (1) erzeugt wird, und der ein erstes Speichermedium (20) umfasst, das einerseits mit einer Masse (K) und andererseits mit der Speiseleitung (5) verbunden ist, und angepasst ist, um die mittlere Gleichspannung (Vᵢₙₜₑᵣ) zu speichern, und ein zweites Speichermedium (21), das zwischen der Speiseleitung (5) und der Masse (K) parallel zum ersten Speichermedium (20) angeordnet und angepasst ist, um die mittlere Gleichspannung (Vᵢₙₜₑᵣ) zu speichern,
- einen dritten Schritt (3) zur Modulation der mittleren Gleichspannung (Vᵢₙₜₑᵣ), der über die Speiseleitung (5) mit der mittleren Gleichspannung (Vᵢₙₜₑᵣ) gespeist wird, die von dem zweiten Schritt (2) gespeichert wird und der angepasst ist, um eine Anregungs-Wechselspannung (V_{E}) des piezoelektrischen Ultraschallaktuators (4) zu erzeugen,
**dadurch gekennzeichnet, dass** der zweite Schritt (2) mindestens umfasst:
- ein erstes Umschaltmittel (22), das in Reihe zwischen dem zweiten Speichermedium (21) und der Masse (K) angeordnet ist und angepasst ist, um selektiv ein Speichern der mittleren Gleichspannung (Vᵢₙₜₑᵣ) durch das zweite Speichermedium (21) bis zu einem niedrigen Gleichspannungssollwert (V_{BT}) zu steuern, so dass U_{BT} < Vᵢₙₜₑᵣ.

2. Vorrichtung zum Steuern nach Anspruch 1, **dadurch gekennzeichnet, dass** der zweite Schritt (2) mindestens ein zweites Umschaltmittel (23) umfasst, das in Reihe zwischen dem ersten Speichermedium (20) und der Masse (K) angeordnet und angepasst ist, um selektiv ein Speichern des mittleren Gleichstroms (Vᵢₙₜₑᵣ) durch das erste Speichermedium (20) bis zu einem hohen Gleichspannungssollwert (V_{HT}) zu steuern, so dass U_{HT} ≤ Vᵢₙₜₑᵣ.

3. Vorrichtung zum Steuern nach Anspruch 1 oder 2, **dadurch gekennzeichnet, dass** der zweite Schritt (2) mindestens ein drittes Umschaltmittel (24) umfasst, das in Reihe zwischen dem ersten Speichermedium (20) und der Speiseleitung (5) angeordnet und angepasst ist, um selektiv ein Speichern des mittleren Gleichstroms (Vᵢₙₜₑᵣ) durch das erste Speichermedium (20) bis zu einem hohen Gleichspannungssollwert (V_{HT}) zu steuern, so dass V_{BT} < V_{HT} ≤ Vᵢₙₜₑᵣ.

4. Vorrichtung zum Steuern nach einem der Ansprüche 1 bis 3, **dadurch gekennzeichnet, dass** das erste Speichermedium (20) mindestens einen ersten Kondensator umfasst, der eine erste elektrische Kapazität (C₁) aufweist, und dadurch, dass das zweite Speichermedium (21) mindestens einen zweiten Kondensator umfasst, der eine zweite elektrische Kapazität (C₂) aufweist, so dass C₂ > C₁.

5. Vorrichtung zum Steuern nach Anspruch 3 oder 4, **dadurch gekennzeichnet, dass** das erste Umschaltmittel (22), das in Reihe zwischen dem zweiten Speichermedium (21) und der Masse (K) angeordnet ist, mindestens einen ersten Transistor (M₂) umfasst, der aufweist:
- eine erste Source (S₂), die mit der Masse (K) verbunden ist,
- einen ersten Drain (D₂), der mit dem zweiten Speichermedium (21) verbunden ist,
- ein erstes Gate (G₂), das mit einem ersten Steuerblock (25) verbunden ist,
- ein erstes Substrat (B₂), das mit der Masse (K) verbunden ist, und
dadurch, dass das dritte Umschaltmittel (24), das in Reihe zwischen dem ersten Speichermedium (20) und der Speiseleitung (5) angeordnet ist, mindestens einen zweiten Transistor (M₃) umfasst, der aufweist:
- eine zweite Source (S₃), die mit der Speiseleitung (5) verbunden ist,
- einen zweiten Drain (D₃), der mit dem ersten Speichermedium (20) verbunden ist,
- ein zweites Gate (G₃), das mit dem ersten Steuerblock (25) verbunden ist,
- ein zweites Substrat (B₃), das mit der Speiseleitung (5) verbunden ist.

6. Vorrichtung zum Steuern nach Anspruch 5, **dadurch gekennzeichnet, dass** der erste Transistor (M₂) mindestens eine erste Diode (d₂) umfasst, die eine erste Anode (A₂) aufweist, die mit der ersten Source (S₂) verbunden ist, und eine erste Kathode (X₂), die mit dem ersten Drain (D₂) verbunden ist, und dadurch, dass der zweite Transistor (M₃) mindestens eine zweite Diode (d₃) umfasst, die eine zweite Anode (A₃) aufweist, die mit der zweiten Source (S₃) verbunden ist, und eine zweite Kathode (X₃), die mit dem zweiten Drain (D₃) verbunden ist.

7. Vorrichtung zum Steuern nach Anspruch 5 oder 6, **dadurch gekennzeichnet, dass** der erste Transistor (M₂) ein n-Kanal-Metalloxid-Halbleiter-Feldeffekttransistor ist, und dadurch, dass der zweite Transistor (M₃) ein p-Kanal-Metalloxid-Halbleiter-Feldeffekttransistor ist.

8. Vorrichtung zum Steuern nach einem der Ansprüche 2 bis 7, **dadurch gekennzeichnet, dass** das zweite Umschaltmittel (23), das in Reihe zwischen dem ersten Speichermedium (20) und der Masse (K) angeordnet ist, mindestens einen dritten Transistor (M₄) umfasst, der aufweist:
- eine dritte Source (S₄), die mit der Masse (K) verbunden ist,
- einen dritten Drain (D₄), der mit dem ersten Speichermedium (20) verbunden ist,
- ein drittes Gate (G₄), das mit einem zweiten Steuerblock (26) verbunden ist,
- ein drittes Substrat (B₄), das mit der Masse (K) verbunden ist,
dadurch, dass der dritte Transistor (M₄) mindestens eine dritte Diode (d₄) umfasst, die eine dritte Anode (A₄) aufweist, die mit der dritten Source (S₄) verbunden ist, und eine dritte Kathode (X₄), die mit dem dritten Drain (D₄) verbunden ist, und
dadurch, dass der dritte Transistor (M₄) ein n-Kanal-Metalloxid-Halbleiter-Feldeffekttransistor ist.

9. Vorrichtung zum Steuern nach einem der Ansprüche 1 bis 8, **dadurch gekennzeichnet, dass** der erste Schritt (1) mindestens einen Spannungswandler vom Typ FLYBACK umfasst, der galvanisch isoliert ist (Sperrwandler).

10. Vorrichtung zum Steuern nach einem der Ansprüche 1 bis 8, **dadurch gekennzeichnet, dass** der erste Schritt (1) mindestens einen Spannungswandler vom Typ BOOST umfasst (Aufwärtswandler).

## Claims

1. Device for controlling at least one ultrasonic piezoelectric actuator (4) driven electronically from a control computer (10) and a DC voltage source (V_{batt}), comprising:
- a first stage (1) for raising said DC voltage (V_{batt}) powered by the DC voltage source (V_{batt}) and designed to generate an intermediate DC voltage (Vᵢₙₜₑᵣ) in a power line (5),
- a second stage (2) for storage powered, via the power line (5), by the intermediate DC voltage (Vᵢₙₜₑᵣ) generated by the first stage (1) and comprising a first storage means (20) connected, on the one hand, to a ground (K), and, on the other hand, to the power line (5), and designed to store the intermediate DC voltage (Vᵢₙₜₑᵣ), and a second storage means (21) mounted between the power line (5) and the ground (K) in parallel with the first storage means (20) and designed to store the intermediate DC voltage (Vᵢₙₜₑᵣ),
- a third stage (3) for modulating the intermediate DC voltage (Vᵢₙₜₑᵣ) powered, via the power line (5), by the intermediate DC voltage (Vᵢₙₜₑᵣ) stored by the second stage (2), and designed to generate an AC excitation voltage (V_{E}) of the ultrasonic piezoelectric actuator (4),
**characterized in that** the second stage (2) comprises at least:
- one first switching means (22) mounted in series between the second storage means (21) and the ground (K) and designed to selectively control a storage of the intermediate DC voltage (Vᵢₙₜₑᵣ) by the second storage means (21) up to a setpoint of low DC voltage (V_{BT}) such that V_{BT} < Vᵢₙₜₑᵣ.

2. Control device according to Claim 1, **characterized in that** the second stage (2) comprises at least one second switching means (23) mounted in series between the first storage means (20) and the ground (K) and designed to selectively control a storage of the intermediate DC voltage (Vᵢₙₜₑᵣ) by the first storage means (20) up to a setpoint of high DC voltage (V_{HT}) such that V_{HT} ≤ Vᵢₙₜₑᵣ.

3. Control device according to Claim 1 or 2, **characterized in that** the second stage (2) comprises at least one third switching means (24) mounted in series between the first storage means (20) and the power line (5) and designed to selectively control a storage of the intermediate DC voltage (Vᵢₙₜₑᵣ) by the first storage means (20) up to a setpoint of high DC voltage (V_{HT}) such that V_{BT} < V_{HT} ≤ Vᵢₙₜₑᵣ.

4. Control device according to any one of Claims 1 to 3, **characterized in that** the first storage means (20) comprises at least one first capacitor having a first electric capacitance (C₁), and **in that** the second storage means (21) comprises at least one second capacitor having a second electric capacitance (C₂) such that C₂ > C₁.

5. Control device according to Claim 3 or 4, **characterized in that** the first switching means (22) mounted in series between the second storage means (21) and the ground (K) comprises at least one first transistor (M₂) having:
- a first source (S₂) connected to the ground (K),
- a first drain (D₂) connected to the second storage means (21),
- a first gate (G₂) connected to a first control block (25),
- a first substrate (B₂) connected to the ground (K), and
**in that** the third switching means (24) mounted in series between the first storage means (20) and the power line (5) comprises at least one second transistor (M₃) having:
- a second source (S₃) connected to the power line (5),
- a second drain (D₃) connected to the first storage means (20),
- a second gate (G₃) connected to the first control block (25),
- a second substrate (B₃) connected to the power line (5).

6. Control device according to Claim 5, **characterized in that** the first transistor (M₂) comprises at least one first diode (d₂) having a first anode (A₂) connected to the first source (S₂) and a first cathode (X₂) connected to the first drain (D₂) and **in that** the second transistor (M₃) comprises at least one second diode (d₃) having a second anode (A₃) connected to the second source (S₃) and a second cathode (X₃) connected to the second drain (D₃).

7. Control device according to Claim 5 or 6, **characterized in that** the first transistor (M₂) is of the n-channel metal oxide semiconductor field effect type, and **in that** the second transistor (M₃) is of the p-channel metal oxide semiconductor field effect type.

8. Control device according to any one of Claims 2 to 7, **characterized in that** the second switching means (23) mounted in series between the first storage means (20) and the ground (K) comprises at least one third transistor (M₄) having:
- a third source (S₄) connected to the ground (K),
- a third drain (D₄) connected to the first storage means (20),
- a third gate (G₄) connected to a second control block (26),
- a third substrate (B₄) connected to the ground (K),
**in that** the third transistor (M₄) comprises at least one third diode (d₄) having a third anode (A₄) connected to the third source (S₄) and a third cathode (X₄) connected to the third drain (D₄), and
**in that** the third transistor (M₄) is of the n-channel metal oxide semiconductor field effect type.

9. Control device according to one of Claims 1 to 8, **characterized in that** the first stage (1) comprises at least one galvanically isolated flyback voltage converter.

10. Control device according to one of Claims 1 to 8, **characterized in that** the first stage (1) comprises at least one boost voltage converter.
